(19) Europäisches Patentamt / European Patent Office / Office européen des brevets

(11) **EP 3 191 412 B1**

(12) **FASCICULE DE BREVET EUROPEEN**

(45) Date de publication et mention de la délivrance du brevet:
**25.11.2020 Bulletin 2020/48**

(21) Numéro de dépôt: **15763288.6**

(22) Date de dépôt: **08.09.2015**

(51) Int Cl.:
***C02F 1/28*** *(2006.01)*

(86) Numéro de dépôt international:
**PCT/EP2015/070520**

(87) Numéro de publication internationale:
**WO 2016/038049 (17.03.2016 Gazette 2016/11)**

(54) **GESTION ACTIVE DES LITS FLUIDISES DE CHARBON ACTIF**

AKTIVE VERWALTUNG VON WIRBELBETTEN AUS AKTIVKOHLE

ACTIVE MANAGEMENT OF FLUIDISED BEDS OF ACTIVATED CARBON

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.09.2014 FR 1458412**

(43) Date de publication de la demande:
**19.07.2017 Bulletin 2017/29**

(73) Titulaire: **SAUR**
**92130 Issy-les-Moulineaux (FR)**

(72) Inventeur: **BLONDEAU, Sabine**
**14860 Amfreville (FR)**

(74) Mandataire: **Regimbeau**
**20, rue de Chazelles**
**75847 Paris Cedex 17 (FR)**

(56) Documents cités:
**US-A1- 2013 243 684**

**Description**

**DOMAINE DE L'INVENTION**

La présente invention concerne un procédé de traitement des fluides aqueux à base de charbon actif en poudre sous forme de lit fluidisé comprenant une étape de gestion active du lit fluidisé de charbon actif de manière à assurer des performances épuratoires constantes à moindre coût.

**ARRIERE PLAN DE L'INVENTION**

Les procédés de traitement des fluides aqueux à base de charbon actif fluidisé, coagulé et éventuellement floculé (CAF) ont pour but d'éliminer les micropolluants organiques présents dans les fluides aqueux, tels que les pesticides, les solvants chlorés, les molécules sapides, les produits pharmaceutiques et les perturbateurs endocriniens, ainsi que de réduire les teneurs en matière organique.

Il est connu d'utiliser des lits fluidisés avec du charbon actif granulaire (CAG) dans des procédés avec régénération tels que ceux décrits par US 2013/243684.

Les procédés de traitement des fluides aqueux à base de CAF peuvent être mis en œuvre dans des réacteurs à lit de charbon coagulé, floculé et fluidisé fonctionnant en flux ascendant (dits « réacteur à CAF »), tels que ceux décrits dans le brevet FR 2946333 (Carboplus ®) ou dans la demande de brevet français n°1354387 déposée le 16 mai 2013. De tels réacteurs comprennent un seul ouvrage dans lequel sont réalisées la mise en contact des eaux à traiter avec le charbon actif en poudre (CAP) et la séparation du charbon des eaux traitées. Dans certaines configurations, telles que celles décrites dans le brevet FR 2946333, les réacteurs peuvent être équipés de moyens d'injection de charbon actif en poudre frais, d'agents de coagulation et de floculation agencés en coordination avec le circuit d'alimentation en eaux brutes de manière à définir dans le réacteur trois zones distinctes de fonctionnement. Une première zone, aménagée à la base du réacteur, assure l'admission et la répartition homogène des eaux brutes dans lesquelles les agents de coagulation et de floculation ont été préalablement injectés. Cette première zone, dite zone aménagée, peut comprendre un garnissage constitué d'un lit de gravier surmonté par un lit de sable. Une seconde zone, constituée par un lit fluidisé de charbon actif en poudre, surmonte la première zone. La seconde zone assure la dépollution des eaux brutes par adsorption. Enfin une troisième zone, aménagée dans la partie haute du réacteur, assure la séparation et la récupération des eaux dépolluées. Dans d'autres configurations, par exemple telles que décrites dans la demande de brevet français n°1354387 déposée le 16 mai 2013, ces réacteurs peuvent être dépourvus d'une zone aménagée à la base du réacteur. L'injection du charbon actif en poudre, du fluide aqueux à traiter, des agents de coagulation et de floculation est alors réalisée par une même rampe de distribution qui permet de définir deux zones dans le réacteur : une zone réactionnelle et une zone de séparation.

Les procédés de traitement des fluides aqueux à base de CAF peuvent également être mis en œuvre dans des installations dans lesquelles chaque étape du procédé est réalisée dans un ouvrage distinct. Par exemple, le CAP coagulé peut être mis en contact avec le fluide aqueux à traiter dans un premier réacteur, puis séparé du fluide aqueux à traiter par décantation dans un autre réacteur.

Pour assurer des performances de traitement constantes, maintenir une concentration en CAP et une hauteur de lit constantes dans la zone réactionnelle du réacteur, du charbon actif en poudre est généralement injecté en continu au sein des réacteurs et des purges régulières de charbon sont réalisées. Un équilibre est atteint lorsque la vitesse de décantation de la suspension est calée sur la vitesse hydraulique de fluidisation.

Dans ces réacteurs, le CAP coagulé, et éventuellement floculé par ajout de polymère, est présent sous forme de flocs de charbon, l'ensemble de ces flocs formant des boues. Ces flocs de charbon comprennent du CAP, des hydroxydes métalliques et de colloïdes et des matières en suspension diverses. Ils se caractérisent généralement par une taille allant de quelques dixièmes de millimètres à quelques millimètres et par des vitesses de décantation allant de 2 à 20 m/h. Le maintien en suspension de ces flocs au sein des réacteurs de décantation ou au sein des réacteurs à CAF pour une vitesse de transport du fluide donnée est lié à la vitesse de décantation des flocs, qui elle-même est liée au taux de charbon contenu dans les flocs. Le taux de charbon contenu dans les flocs a ainsi une incidence sur la hauteur de fluidisation du lit de charbon. Par ailleurs, à un taux de charbon donné dans les flocs correspond une concentration maximale en charbon dans le réacteur.

Une diminution du taux de charbon dans les flocs de charbon en dessous de certains seuils entraine une augmentation de la hauteur du lit de charbon, voire l'entrainement des flocs de charbon par le fluide aqueux hors du réacteur. La séparation entre les flocs de charbons et le fluide aqueux n'est plus effective.

La diminution du taux de charbon dans les flocs peut également entrainer une déconcentration du lit de charbon actif, en particulier dans les réacteurs équipés de fosses à boues ou d'un système de piquage latéral à débit de purge asservi à une hauteur de lit fixe. La déconcentration du lit de charbon actif entraine une diminution des performances.

La diminution de taux de charbon dans les flocs de charbons peut être liée à différents phénomènes, comme par exemples un changement de la qualité du fluide aqueux pénétrant dans le ou les réacteurs, un mauvais mélange des réactifs, par exemple de la chaux, en amont du réacteur et/ou une purge du réacteur unique de fluidisation ou du réacteur de décantation insuffisante.

La stabilité du lit de CAF peut également être affectée par la présence de colloïdes, d'hydroxydes métalliques et de matières en suspensions en excès dans les fluides aqueux à traiter. En effet, ces constituants vont être piégés dans le lit fluidisé de charbon actif et diminuer les vitesses de décantation de la suspension de CAF. Ainsi, une dégradation rapide de la qualité des fluides aqueux engendre une augmentation de la hauteur du front de fluidisation du lit de charbon et sa déconcentration.

A ce jour, lorsque la stabilité du lit de CAF et la concentration en charbon n'est plus assurée pour les raisons évoquées ci-dessus, une seule solution existe : augmenter le renouvellement en CAP coagulé pour renouveler les flocs de charbon et augmenter les purges pour se débarrasser des flocs pauvres en charbon. Cette technique présente l'inconvénient de surdoser le CAP par rapport au réel besoin épuratoire, ce besoin correspondant à la quantité nécessaire en CAP pour garantir des concentrations en polluants dissous, tels que les pesticides, inférieures aux concentrations réglementaires.

Ces correctifs de traitement en CAP engendrent des surcoûts d'exploitation, en particulier en entrainant une surconsommation en charbon actif en poudre neuf.

Il est également connu de l'art antérieur, la mise en place d'opérations de régénérations classiques in situ telles que la régénération thermique ou chimique, et ce usuellement pour les charbons actifs en grain. Ces opérations sont lourdes à mettre en place sur des sites tels que, par exemple, des usines de production d'eau potable. L'installation de ce type de procédé est une solution très onéreuse au regard des quelques dizaines de kilos de charbon actif à traiter et qui générerait de nouveaux déchets nécessitant des traitements supplémentaires tels que le traitement des fumées, le traitement d'effluents acides (pH<5) ou basiques (>9) riches en polluants désorbés. De plus, ces solutions ne permettent pas d'apporter une solution rapide et en parallèle du procédé en cas de variation rapide de la qualité de l'affluent.

Un besoin existe donc pour la mise à disposition d'un procédé peu onéreux et/ou d'une installation de traitement des fluides aqueux qui permette de pallier les dérives de comportement du lit de CAF, en particulier de gérer/stabiliser la hauteur de fluidisation du lit de CAP coagulé lorsque la qualité de l'eau d'entrée se dégrade, de concentrer le lit de charbon pour stabiliser ou améliorer les performances d'élimination et de diminuer les consommations en CAP coagulé en concentrant le lit de charbon pour une performance épuratoire équivalente.

## BREVE DESCRIPTION DE L'INVENTION

La présente invention concerne un procédé de traitement d'un fluide aqueux comprenant une mise en contact du fluide aqueux avec un lit fluidisé de charbon actif en poudre et une séparation du fluide aqueux du lit de charbon actif en poudre, ledit procédé de traitement étant caractérisé en ce qu'il comprend une étape de gestion du lit fluidisé de charbon actif en poudre, ladite étape de gestion comprenant :

(a) une extraction d'une fraction du lit fluidisé de charbon actif en poudre sous forme de boues ;
(b) au moins une séparation des boues extraites à l'étape (a) de manière à obtenir une fraction présentant un indice insoluble HCl supérieur d'au moins 5 points de pourcentage à celui des boues avant séparation, ladite étape de séparation (b) étant réalisée au moyen d'au moins un hydrocyclone ;
(c) une réinjection de ladite fraction obtenue à l'étape (b) dans le lit fluidisé de charbon actif en poudre,

le charbon actif en poudre présentant un diamètre moyen inférieur à 100 $\mu$m.

Le lit fluidisé de CAP est un lit fluidisé de CAP coagulé et éventuellement floculé.

La présente invention concerne également une installation de traitement de fluides aqueux comprenant :

(a) un dispositif de traitement de fluides aqueux à base de charbon actif en poudre permettant d'assurer une mise en contact du fluide aqueux avec un lit fluidisé de charbon actif en poudre et une séparation du fluide aqueux du lit de charbon actif en poudre;
(b) des moyens d'extraction d'une fraction du lit fluidisé de charbon actif sous forme de boues ;
(c) des moyens d'acheminement des boues du point d'extraction vers le dispositif de séparation des boues ;
(d) au moins un dispositif de séparation des boues, ledit dispositif de séparation des boues étant au moins un hydrocyclone ;
(e) des moyens d'acheminement des boues séparées vers le dispositif de traitement de fluides aqueux,

le charbon actif en poudre présentant un diamètre moyen inférieur à 100 $\mu$m.

Le lit fluidisé de CAP est un lit fluidisé de CAP coagulé et éventuellement floculé.

## BREVE DESCRIPTION DES DESSINS

La figure 1 représente un exemple d'installation selon la présente invention permettant la mise en œuvre du procédé de la présente invention

La figure 2 représente la variation de l'abattement de l'absorbance UV à 254nm en fonction de la valeur de la CT.

La figure 3 représente schématiquement un procédé mettant en œuvre plusieurs étapes de séparation.

## DESCRIPTION DETAILLEE DE L'INVENTION

Les inventeurs ont mis au point un procédé de traitement des fluides aqueux à base de charbon actif en poudre sous forme de lit fluidisé, coagulé et éventuellement floculé, comprenant une étape de gestion du lit fluidisé telle que décrite ci-dessous. Cette étape permet *in fine* de pallier les dérives des lits de charbon actif en poudre décrites ci-dessus.

Le terme « fluide(s) aqueux » tel qu'utilisé dans la description de la présente invention désigne des eaux de surface, des eaux souterraines, des eaux résiduaires urbaines ou tertiaires et/ou des eaux industrielles.

L'expression « charbon actif en poudre » telle qu'utilisée dans la description de la présente invention désigne des particules de charbon actif dont le diamètre moyen est inférieur à 100 $\mu$m. Le diamètre moyen des particules varie typiquement de 1 à 99 $\mu$m, tel que de 3 à 80 $\mu$m ou de 5 à 45 $\mu$m, ou 15 à 45 $\mu$m. La taille des particules peut être déterminée par granulométrie laser.

L'expression « matière en suspension » ou « MES » telle qu'utilisée dans la description de la présente invention désigne l'ensemble des matières solides obtenues après évaporation des eaux contenues dans les boues de CAP. Il s'agit de la part de matière en suspension du lit de charbon actif en poudre. Les MES incluent le CAP, les hydroxydes métalliques, la chaux.

Le procédé de traitement des fluides aqueux de la présente invention comprend une mise en contact du fluide aqueux avec un lit fluidisé de charbon actif en poudre et une séparation du fluide aqueux du lit de charbon actif en poudre. Le procédé de traitement permet donc d'éliminer les micropolluants organiques présents dans les fluides aqueux, tels que les pesticides, les solvants chlorés, les molécules sapides, les produits pharmaceutiques et les perturbateurs endocriniens, ainsi que de réduire les teneurs en matière organique. Avantageusement, les fluides aqueux mis en contact avec le lit fluidisé de charbon actif en poudre ont été préalablement traités au moyen d'agents de coagulation et éventuellement d'agents de floculation, en particulier dans le cas d'une eau chargée en matière organique, telle qu'une eau de barrage.

Les fluides aqueux à traiter sont mis en contact avec une suspension de CAP neuf et d'agents de coagulation, et éventuellement d'agents de floculation, au sein du réacteur de traitement à charbon actif en poudre ou en amont du réacteur de traitement.

Les agents de coagulation peuvent être choisis parmi les agents de coagulation à base de fer, d'aluminium ou leurs mélanges, tels que le chlorure ferrique, le sulfate ferrique ou le sulfate d'aluminium. Des exemples d'agents de coagulation commerciaux incluent les produits WAC, WAC HB et Aqualenc.

Les agents de floculation peuvent être choisis parmi les agents de floculation acryliques, comme les polyacrylamides anioniques et non ioniques.

La mise en contact du fluide aqueux avec le lit fluidisé de charbon actif en poudre et la séparation du fluide aqueux du lit de charbon actif en poudre peuvent être réalisées dans un ouvrage unique, tel qu'un réacteur de traitement à charbon actif en poudre fonctionnant en flux ascendant, tel que par exemple décrit dans FR2946333 ou dans la demande de brevet français n°1354387 déposée le 16 mai 2013. Par exemple, le réacteur de traitement à lit fluidisé de charbon actif en poudre fonctionnant en flux ascendant peut comprendre :

- une zone réactionnelle constituée d'un lit fluidisé de charbon actif en poudre s'étendant depuis la base du réacteur, ladite zone réactionnelle comprenant :
- une rampe de distribution du fluide aqueux à traiter située à la base du réacteur et connectée à la canalisation de transport du fluide aqueux à traiter;
- un circuit d'injection de réactifs, tels que : CAP neuf, coagulants, floculants, typiquement en amont de la rampe de distribution du fluide aqueux à traiter;
- un circuit d'extraction du charbon actif usagé ;
- une zone de séparation surmontant la zone réactionnelle permettant la séparation gravitaire du fluide aqueux dépollué du charbon actif en poudre.

Dans certains modes de réalisation, la mise en contact du fluide aqueux avec le lit fluidisé de charbon actif en poudre et la séparation du fluide aqueux du lit de charbon actif en poudre peuvent être réalisées dans des ouvrages distincts.

Le procédé de la présente invention est caractérisé en ce qu'il comprend une étape de gestion du lit fluidisé de charbon actif en poudre. Cette étape de gestion comprend ou consiste en :

(a) une extraction d'une fraction du lit fluidisé de charbon actif en poudre, avantageusement coagulé et éventuellement floculé, sous forme de boue ;
(b) au moins une séparation des boues extraites à l'étape (a) de manière à obtenir une fraction présentant un indice insoluble HCl supérieur d'au moins 5 points de pourcentage, de préférence d'au moins 10 points de pourcentage, à celui des boues avant séparation ;
(c) une réinjection de ladite fraction obtenue à l'étape (b) dans le lit fluidisé de charbon actif en poudre, avantageusement coagulé et éventuellement floculé.

De manière avantageuse, le procédé de la présente invention permet de :

- Gérer/stabiliser la hauteur de fluidisation du lit de CAP coagulé lorsque la qualité du fluide aqueux entrant dans le réacteur se dégrade;
- Concentrer le lit de CAP pour stabiliser ou améliorer les performances d'élimination;
- Diminuer les consommations en CAP en concentrant le lit de charbon pour une performance épuratoire équivalente,

Le procédé est de plus simple à mettre en œuvre.

L'indice Insoluble HCl permet d'évaluer le taux de charbon contenu dans les boues de charbon actif, plus précisément dans la MES des boues de charbon actif. Cet indice correspond au rapport, exprimé en pourcentage, entre la masse d'un échantillon de boue de charbon, préalablement séché à 105°C, attaqué à l'acide chlorhydrique à chaud pendant 20 minutes sur la masse de cet échantillon de boue séché avant attaque acide. Autrement dit, il s'agit de la part de de charbon actif en poudre contenue dans la MES des boues de charbon. En effet, l'acide chlorhydrique à chaud solubilise les colloïdes, la chaux et les hydroxydes, tels que les hydroxydes de fer, contenues dans les boues. Le résidu obtenu à l'issue de ce traitement à l'acide à chaud comprend essentiellement du charbon actif qui n'est quant à lui pas solubilisé.

Lorsque la mise en contact du fluide aqueux avec le lit fluidisé de charbon actif en poudre et la séparation du fluide aqueux du lit de charbon actif en poudre sont réalisées dans un réacteur unique, l'indice Insoluble HCl est avantageusement supérieur à 75%, et préférentiellement supérieur à 80% dans le cas d'un fonctionnement optimal, c'est-à-dire à CT>90 (CT= Concentration en MES du lit de charbon actif (g/L) * temps de contact entre le fluide aqueux à traiter et le CAF (min)).

Lorsque la mise en contact du fluide aqueux avec le lit fluidisé de charbon actif en poudre et la séparation du fluide aqueux du lit de charbon actif en poudre sont réalisées dans des ouvrages distincts, l'indice Insoluble HCl est avantageusement supérieur à 55%, et préférentiellement supérieur à 60% dans le cas d'un fonctionnement optimal, le fonctionnement optimal étant tel que décrit ci-dessus.

La fraction présentant un indice insoluble HCl supérieur d'au moins 5 points de pourcentage à celui des boues avant séparation telle qu'obtenue à l'étape (b) du procédé présente typiquement une concentration en MES au moins deux fois supérieure à la concentration en MES des boues avant séparation. La concentration en MES est déterminée selon le protocole décrit dans la section « exemples ».

Le procédé de la présente invention comprend au moins une étape de séparation des boues extraites. Chaque étape de séparation conduit à l'obtention de deux fractions.

Il doit être compris que le procédé de la présente invention peut comprendre une seule étape de séparation permettant d'obtenir directement une fraction présentant un indice insoluble HCl supérieur d'au moins 5 points de pourcentage à celui des boues avant séparation. La seconde fraction obtenue présente une concentration en MES inférieure ou égale à la concentration en MES des boues avant séparation, typiquement au moins 1.5 fois inférieure à celle des boues avant séparation. La concentration en MES est déterminée selon le protocole décrit dans la section « exemples ». La seconde fraction peut être traitée par clarification ou flottation en amont du réacteur de traitement ou traitée par une filière de traitement des boues.

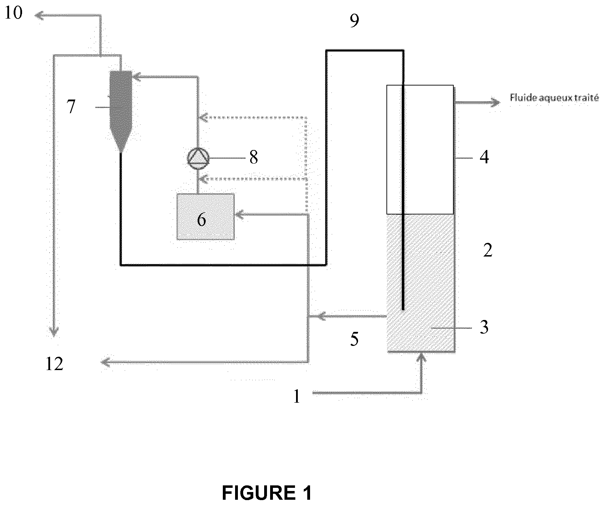

La figure 1 présente de manière schématisée un exemple d'installation selon la présente invention permettant la mise en œuvre du procédé de la présente invention. Le fluide aqueux à traiter (1), préalablement mis en contact avec du charbon actif en poudre, des agents coagulants et éventuellement des agents de floculation est introduit en partie basse d'un réacteur de traitement (2) à lit fluidisé de charbon actif en poudre fonctionnant en flux ascendant comprenant une zone réactionnelle (3) constituée d'un lit fluidisé de charbon actif en poudre s'étendant depuis la base du réacteur et une zone de séparation (4) surmontant la zone réactionnelle permettant la séparation gravitaire du fluide aqueux dépollué du charbon actif en poudre. Des boues de charbon (5) sont extraites en partie basse du réacteur et peuvent être dirigées vers une cuve tampon (6) puis dirigées vers un hydrocyclone (7) au moyen d'un système de pompage (8) ou directement vers l'hydrocyclone (7) au moyen du système de pompage (8). Après séparation au sein de l'hydrocyclone, la fraction (9) des boues présentant un indice insoluble HCl supérieur d'au moins 5 points de pourcentage à celui des boues avant séparation est réintroduite au sein du réacteur. L'autre fraction (10) peut être redirigée en amont de la filière de traitement des fluides aqueux (11) ou éliminées (12).

Cependant, dans certains modes de réalisation, il peut être nécessaire de réaliser plusieurs étapes de séparation en série afin d'obtenir une fraction présentant un indice insoluble HCl supérieur d'au moins 5 points de pourcentage à celui des boues avant séparation.

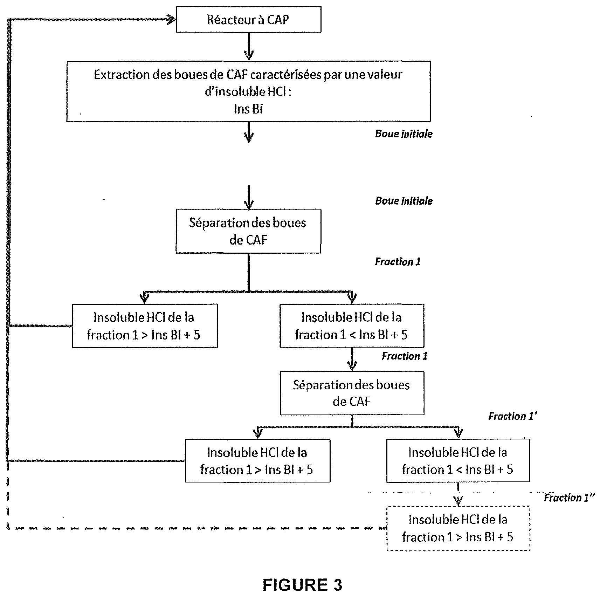

En effet, si à l'issue d'une première étape de séparation, l'indice insoluble HCl d'une des fractions obtenues est jugé insuffisant, cette fraction peut être elle-même séparée de manière à produire deux nouvelles fractions. Lorsqu'une fraction présentant un indice insoluble HCl supérieur d'au moins 5 points de pourcentage à celui des boues avant séparation est obtenue, cette fraction est alors réinjectée dans le lit fluidisé de charbon actif en poudre. Si aucune des fractions obtenues ne présentent un indice HCl satisfaisant, elles peuvent être à nouveau séparées. La figure 3 est illustrative d'un procédé mettant en œuvre plusieurs étapes de séparation.

L'étape de séparation ou les étapes de séparation est/sont réalisée(s) au moyen d'un hydrocyclone ou plusieurs hydrocyclones. Les hydrocyclones sont des appareils qui permettent de séparer des particules par classification hydraulique centrifuge. Ils sont typiquement constitués d'une enceinte cylindroconique dans laquelle l'alimentation tangentielle met l'eau en rotation avant sa sortie par une tubulure axiale de surverse. Dans le cadre de la présente invention, l'hydrocyclone permet d'augmenter la part de charbon actif contenu dans la MES des boues de CAF.

Les étapes de séparation successives peuvent être mises en œuvre au moyen d'une pluralité d'hydrocyclones installés en série. Le nombre d'hydrocyclones installés en série dépendra de l'indice insoluble HCl à chaque étape. Cet ensemble de un ou plusieurs hydrocyclones permet avantageusement de produire au moins une fraction caractérisée par un indice insoluble HCl :

- supérieur à 75 % dans le cas où l'installation de traitement de fluide aqueux par contact fluidisé avec du charbon actif coagulé comprend un réacteur unique de mise en contact et de séparation de l'eau à traiter avec le lit fluidisé de charbon actif coagulé,
- supérieur à 55% dans le cas où l'installation de traitement de fluide aqueux par contact fluidisé avec du charbon actif coagulé comprend plusieurs réacteurs.

La ou les étapes de séparation peut/peuvent être réalisée(s) en continu ou de manière périodique.

La présente invention porte également sur une installation de traitement des fluides aqueux comprenant :

(a) un dispositif de traitement de fluide aqueux à base de charbon actif en poudre, coagulé et éventuellement floculé, permettant d'assurer une mise en contact du fluide aqueux avec un lit fluidisé de charbon actif en poudre, avantageusement coagulé et éventuellement floculé, et une séparation du fluide aqueux du lit de charbon actif en poudre, avantageusement coagulé et éventuellement floculé;
(b) des moyens d'extraction d'une fraction du lit fluidisé de charbon actif sous forme de boues ;
(c) des moyens d'acheminement des boues du point d'extraction vers le dispositif de séparation des boues ;
(d) au moins un dispositif de séparation des boues, ladite étape de séparation (b) étant réalisée au moyen d'au moins un hydrocyclone ;
(e) des moyens d'acheminement des boues séparées vers le dispositif de traitement de fluide aqueux,

le charbon actif en poudre présentant un diamètre moyen inférieur à 100 μm.

Le dispositif de traitement de fluide aqueux à base de charbon actif de l'installation peut être un réacteur de traitement à charbon actif en poudre fonctionnant en flux ascendant, par exemple tel que décrit dans FR2946333 ou dans la demande de brevet français n°1354387 déposée le 16 mai 2013.

Les moyens d'extraction des boues de flocs de charbon peuvent être des circuits d'extraction, de préférence disposés dans la partie inférieure de la zone réactionnelle du réacteur. L'extraction du charbon actif peut être réalisé par pompage ou par soutirage gravitaire par le biais d'une canalisation d'extraction (5) débouchant au sein du lit de charbon. L'extraction du charbon actif peut également être réalisée par le biais d'un concentrateur recueillant les flocs de charbon actif en poudre à partir d'une surverse en partie supérieure de la zone réactionnelle. Les deux systèmes d'extraction de charbon actif en poudre peuvent être combinés.

Les boues de charbon actif peuvent être acheminées directement vers le dispositif de séparation des boues au moyen d'un système de pompage ou elles peuvent être dirigées vers une cuve tampon, pouvant être mise sous agitation, qui permettra de stocker un certain volume de boue avant séparation. A la figure 1, l'installation de traitement comprend une cuve tampon.

Le système de pompage permet d'introduire les boues dans le dispositif de séparation, typiquement avec une pression minimale supérieure ou égale à 1,8 bars.

Le dispositif de séparation est un hydrocyclone. La phase la moins concentrée en CAP, c'est-à-dire présentant l'indice insoluble HCl le plus faible, de l'hydrocyclone rejoint le circuit d'évacuation des boues. La phase la plus concentrée en CAP est avantageusement réintroduite au bas du réacteur à CAF au moyen d'un tuyau ou d'une canalisation qui généralement plonge dans le réacteur jusqu'à 1 mètre au dessus du plancher. L'unité d'hydrocyclonage sera placée de préférence au-dessus du réacteur afin que les boues soient injectées gravitairement. Sinon, l'acheminement se fera à partir d'une unité de stockage/injection par jeu de pompe.

L'hydrocyclone peut être associé à un second ensemble de pompage du charbon et à un autre hydrocyclone afin de traiter la surverse du premier étage.

Lorsque l'installation de traitement de fluide aqueux par contact fluidisé avec du charbon actif coagulé comprend un réacteur unique de mise en contact et de séparation de l'eau à traiter avec le lit fluidisé de charbon actif coagulé, la fraction produite dont l'indice insoluble HCl est le plus fort peut être réintroduite au sein du réacteur soit gravitairement, soit au moyen d'un système de pompage au sein du lit de charbon du réacteur, préférentiellement dans la partie inférieure du réacteur.

Lorsque l'installation de traitement de fluide aqueux par contact fluidisé avec du charbon actif coagulé comprend plusieurs réacteurs, la fraction produite dont l'insoluble HCl est le plus fort peut être réintroduite au sein de l'un des réacteurs (réacteur de mise en contact ou réacteur de séparation) soit gravitairement, soit au moyen d'un système de pompage au sein du lit de charbon du réacteur, préférentiellement dans la partie inférieure du réacteur.

Dans le cas où cette fraction est réintroduite dans le ou les réacteurs au moyen d'un système de pompage, une cuve intermédiaire peut être ajoutée.

Les autres fractions peuvent être acheminées partiellement ou en totalité en amont de l'installation de traitement de fluide aqueux par contact fluidisé avec du charbon actif coagulé si celle-ci est précédée d'au moins une étape de clarification du fluide aqueux à traiter. Ces fractions pourront être évacuées partiellement ou en totalité vers la filière de traitement des rejets de la filière.

## EXEMPLES

*Détermination de l'indice insoluble HCl*

L'indice insoluble HCl est déterminé en réalisant une attaque acide à ébullition constante pendant 20 minutes d'un échantillon de boue de charbon prélevé au sein du lit de charbon actif en poudre et préalablement séché à l'étuve à 105°C. Après 20 minutes, la suspension est filtrée sur filtre en fibre de verre de type Whatman GFC. Le filtre et son contenu sont ensuite séchés à l'étuve à 105°C.

L'insoluble HCl est le rapport entre les masses sèches du résiduel d'échantillon attaqué à l'acide et de la masse de boue de charbon initiale.

*Détermination de la concentration en MES*

Réactifs :

- Eau Ultrapure

Matériel :

- Kit de filtration (fiole rodée, support de filtre avec extrémité à vide, récipient gradué, pince aluminium, pompe à vide, tuyaux)
- Filtre GFC Whatman circulaire de Ø 47 mm et de porosité 0,45 $\mu$m
- Eprouvette graduée d'1 L (ou moins en fonction du volume à filtrer)
- Balance de précision
- Dessiccateur
- Pince
- Etuve à 105°C

Mode opératoire :

Préparation des filtres papier :

- Rincer les papiers filtre avec de l'eau Ultrapure en utilisant le kit de filtration
- Mettre les papiers à l'étuve à 105°C

Détermination des MES :

- Sortir les papiers filtres de l'étuve et les laisser refroidir 30 min au dessiccateur
- Peser les filtres un à un à l'aide d'une balance de précision (utiliser une pince pour prendre les filtres et une coupelle en aluminium pour les emmener)
- Placer un filtre sur le support filtre du kit puis mettre le récipient gradué en le maintenant avec la pince aluminium
- Raccorder le support filtre avec la pompe à vide
- Allumer la pompe
- Prélever un Litre d'échantillon à analyser dans une éprouvette graduée propre
- Verser l'eau au fur et à mesure dans le récipient jusqu'à vider l'éprouvette
- Eteindre la pompe à vide, ôter la pince puis le récipient
- Oter le filtre avec la pince et le poser dans la coupelle en aluminium
- Mettre la coupelle à l'étuve à 105°C au minimum 12 heures
- Sortir la coupelle et la mettre au dessiccateur pendant 30 minutes
- Peser le filtre sur une balance de précision

Expression des résultats :

$$MES \text{ (en g/L)} = (m_2 - m_1) / V$$

Avec :

- $m_1$ la masse en g du filtre initial
- $m_2$ la masse en g du filtre après filtration
- V le volume en mL d'échantillon filtré

*Hydrocyclonage d'une boue de CAF*

Caractéristiques du réacteur d'affinage au CAP :

Réacteur unique sans garnissage (tel que décrit dans la demande de brevet français n°1354387 déposée le 16 mai 2013) avec injection de CAP coagulé et de polymère anionique. CAP de type micro-mésoporeux, de diamètre médian de 15 à 35 $\mu$m.
Des essais d'hydrocyclonage d'une telle boue de CAF ont été réalisés à l'échelle pilote au moyen d'un hydrocyclone 2 pouces de la marque MOZLEY, et de cheminées (vortex finders) et apex (spigots) de différentes tailles : de 8 à 14 mm pour les vortex finders, et de 3,2 à 9,4 mm pour les spigots.
Le tableau 1 montre des résultats obtenus avec un vortex finder de taille 14,3 et des spigots de taille 6,4 et 9,4. Dans les deux configurations, la boue récupérée en sousverse est plus concentrée en MES que la boue initiale, et présente une teneur en CAP dans les MES plus grande, 93% d'insoluble HCl en moyenne en sousverse contre 83% pour la boue de CAF initiale. En revanche, contrairement à la boue initiale, les flocs de charbons de la boue de sousverse ne décantent pas : le floc est déstructuré.
Des résultats similaires présentés dans le tableau 2 sont obtenus avec un vortex finder de taille 14 et des spigots de taille 3,2 à 9,4 mm.
La boue récupérée en sousverse de l'hydrocyclone a ensuite été réintroduite selon un certain débit dans la partie inférieure du réacteur d'affinage au CAF : cette réinjection de la boue de sousverse n'a induit aucune augmentation de la turbidité de l'eau en sortie du réacteur d'affinage : les flocs de charbon de la boue de sousverse sont donc piégés par le lit de CAF du réacteur.

Tableau 1 : résultats des essais de la première série réalisés à 2 bars sur HC Mozley 2 pouces

| Vortex finder | Spigot | Boue initiale | | Boue sousverse | | | Gain en teneur en CAP |
|---|---|---|---|---|---|---|---|
| | | MES | Teneur en CAP dans les MES | Ratio Débit sousvetse/ Débit initial | MES | Teneur en CAP dans les MES | Teneur en CAP (Boue sousverse - Boue initiale) |
| | | g/L | % | % | g/L | % | Point de % |
| 14,3 | 6,4 | 5,1 | 83 | 9 | 26 | 94 | 11 |
| 14,3 | 9,4 | 5,6 | 83 | 22 | 20 | 92 | 9 |

Tableau 2 : résultats des essais de la seconde série réalisés à 2 bars sur HC Mozley 2 pouces

| Vortex finder | Spigot | Boue initiale | | Boue sousverse | | | Gain en teneur en CAP |
|---|---|---|---|---|---|---|---|
| | | MES | Teneur en CAP dans les MES | Ratio Débit sousverse/ Débit initial | MES | Teneur en CAP dans les MES | Teneur en CAP |
| | | g/L | % | % | g/L | % | Point de % |
| 14 | 4,5 | 14,4 | 83 | 4% | 119 | 93 | 10 |
| 14 | 3,2 | 14,4 | 83 | 3% | 352 | 95 | 12 |
| 14 | 6,4 | 14,4 | 83 | 14% | 80 | 94 | 11 |
| 14 | 8 | 21,0 | 80 | 16% | 68 | 89 | 9 |
| 14 | 9,4 | 21,0 | 80 | 27% | 50 | 88 | 8 |

*Effet de la réiniection des boues de sousverse sur la gestion du réacteur à CAF*

Des essais ont été réalisés à l'échelle pilote pour évaluer et valider l'intérêt de l'utilisation de l'hydrocyclone sur les boues de réacteurs CAF.

**Essai 1**

L'état initial du lit de CAF est le suivant :

- une hauteur de lit de CAF de 2,9 mètres ;
- un profil de concentration en MES hétérogène avec des valeurs en MES variant de 5,8 à 7,5 g/l ;
- des teneurs en CAP dans les MES de l'ordre de 84%.

L'application de 4 cycles d'hydrocyclonages (extraction d'un volume de CAF + utilisation de l'hydrocyclone + injection au bas du réacteur des boues récupérées en sousverse de l'hydrocylone) ont permis :

- de diminuer la hauteur du lit de CAF de 2,9 m à 2,1m ;
- de concentrer la teneur en MES du lit de CAF avec des valeurs comprises entre 7,7 et 8,2 g/l (hors hauteur de purge)
- d'augmenter les teneurs en CAP dans les MES du réacteur de 84 à 87%
- de produire une fraction 1 dont l'insoluble HCl est supérieur à 91%, soit 7 points de pourcentage de plus que la valeur d'insoluble HCl de la boue initiale traitée.

Durant ces essais, la valeur de CT (= concentration en MES (g/L) * temps de contact eau/boue (min)) s'est maintenue à 130.

Le traitement par hydrocyclone d'une partie de la boue d'un réacteur à CAF permet donc, en réinjectant la boue obtenue par sousverse, de diminuer la hauteur du lit de CAF.

**Essai 2**

La comparaison des résultats d'abattement de l'absorbance UV à 254nm obtenus avant les essais de réinjection et pendant ces essais montrent que :

- avant les essais, les valeurs de CT variaient entre 60 et 90 ;
- pendant les essais, les valeurs de CT ont permis de travailler avec un CT compris entre 80 et 140.

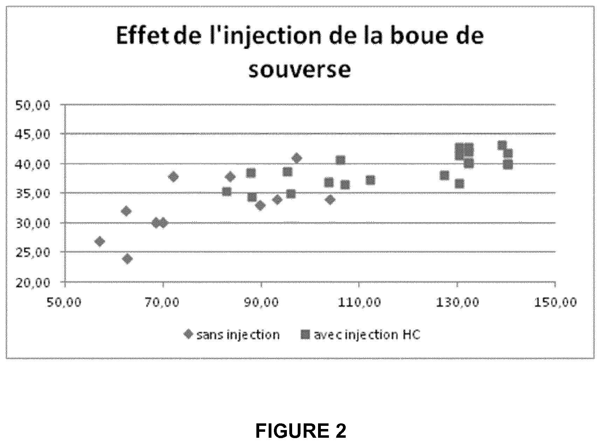

L'augmentation de la valeur de CT de 60 et 140 a permis d'améliorer les abattements de l'absorbance UV à 254nm de 25% à 44%, et ce sans dépasser une hauteur de lit de CAF de 3 m (figure 2).

**Revendications**

1. Procédé de traitement d'un fluide aqueux comprenant une mise en contact du fluide aqueux avec un lit fluidisé de charbon actif en poudre coagulé et éventuellement floculé et une séparation du fluide aqueux du lit de charbon actif en poudre coagulé et éventuellement floculé, ledit procédé de traitement étant **caractérisé en ce qu'**il comprend une étape de gestion du lit fluidisé de charbon actif en poudre coagulé et éventuellement floculé, ladite étape de gestion comprenant :

   (a) une extraction d'une fraction du lit fluidisé de charbon actif en poudre coagulé et éventuellement floculé sous forme de boues ;
   (b) au moins une séparation des boues extraites à l'étape (a) de manière à obtenir une fraction présentant un indice insoluble HCl supérieur d'au moins 5 points de pourcentage à celui des boues avant séparation , ladite étape de séparation (b) étant réalisée au moyen d'au moins un hydrocyclone;
   (c) une réinjection de ladite fraction obtenue à l'étape (b) dans le lit fluidisé de charbon actif en poudre coagulé et éventuellement floculé,

   le charbon actif en poudre présentant un diamètre moyen inférieur à 100 $\mu$m.

2. Procédé selon la revendication 1 dans lequel ladite fraction présente une concentration en matière en suspension (MES) au moins 2 fois supérieure à la concentration en MES des boues avant séparation.

3. Procédé selon la revendication 1 dans lequel la mise en contact du fluide aqueux avec un lit fluidisé de charbon actif en poudre coagulé et éventuellement floculé et la séparation du fluide aqueux du lit de charbon actif en poudre coagulé et éventuellement floculé sont réalisées dans un réacteur unique de traitement à charbon actif en poudre fonctionnant en flux ascendant.

4. Procédé selon l'une des revendications précédentes dans lequel l'étape de séparation (b) est réalisée en continu ou de manière périodique.

5. Procédé selon l'une des revendications précédentes dans lequel ladite fraction présente un indice HCl supérieur d'au moins 10 points de pourcentage à celui des boues avant séparation.

6. Procédé selon l'une des revendications précédentes dans lequel une seule séparation est réalisée et la seconde fraction obtenue présente une concentration en MES au moins 1.5 fois inférieure à celle des boues avant séparation.

7. Procédé selon la revendication 6 dans lequel la seconde fraction est traitée par clarification ou flottation en amont du réacteur de traitement ou traitée par une filière de traitement des boues.

8. Installation de traitement de fluides aqueux comprenant :

   (a) un dispositif de traitement de fluides aqueux à base de charbon actif en poudre coagulé et éventuellement floculé adapté pour assurer une mise en contact du fluide aqueux avec un lit fluidisé de charbon actif en poudre coagulé et éventuellement floculé et une séparation du fluide aqueux du lit de charbon actif en poudre coagulé et éventuellement floculé ;

(b) des moyens d'extraction d'une fraction du lit fluidisé de charbon actif en poudre sous forme de boues ;

(c) des moyens d'acheminement des boues du point d'extraction vers le dispositif de séparation des boues;

(d) au moins un dispositif de séparation des boues adapté pour obtenir une fraction présentant un indice insoluble HCI supérieur d'au moins 5 points de pourcentage à celui des boues avant séparation, ledit dispositif de séparation des boues étant au moins un hydrocyclone ;

(e) des moyens d'acheminement des boues séparées vers le dispositif de traitement de fluides aqueux,

le charbon actif en poudre présentant un diamètre moyen inférieur à 100 μm.

9. Installation selon la revendication 8 dans laquelle le dispositif de traitement de fluides aqueux est un réacteur unique de traitement à charbon actif en poudre fonctionnant en flux ascendant.

## Patentansprüche

1. Verfahren zur Behandlung eines wässrigen Fluids, umfassend ein Inkontaktversetzen des wässrigen Fluids mit einem Wirbelbett aus Aktivkohle aus koaguliertem und eventuell geflocktem Pulver und ein Trennen des wässrigen Fluids von dem Bett aus Aktivkohle aus koaguliertem und eventuell geflocktem Pulver, wobei das Behandlungsverfahren **dadurch gekennzeichnet ist, dass** es einen Schritt zur Verwaltung des Wirbelbetts aus Aktivkohle aus koaguliertem und eventuell geflocktem Pulver umfasst, wobei der Verwaltungsschritt umfasst:

(a) eine Extraktion einer Fraktion aus dem Wirbelbett aus Aktivkohle aus koaguliertem und eventuell geflocktem Pulver in Form von Schlämmen;

(b) mindestens eine Trennung der in Schritt (a) extrahierten Schlämme derart, dass eine Fraktion erhalten wird, die einen Unlöslichkeitsindex HCI von über mindestens 5 Prozentpunkten über dem der Schlämme vor der Trennung aufweist; wobei der Trennungsschritt (b) mittels mindestens eines Hydrozyklons durchgeführt wird;

(c) eine Wiedereinleitung der in Schritt (b) erhaltenen Fraktion in das Wirbelbett aus Aktivkohle aus koaguliertem und eventuell geflocktem Pulver,

wobei die Aktivkohle aus Pulver einen mittleren Durchmesser von unter 100 μm aufweist.

2. Verfahren nach Anspruch 1, wobei die Fraktion eine Schwebstoffkonzentration (SS) aufweist, die mindestens 2 Mal höher als die SS-Konzentration der Schlämme vor der Trennung ist.

3. Verfahren nach Anspruch 1, wobei das Inkontaktversetzen des wässrigen Fluids mit einem Wirbelbett aus Aktivkohle aus koaguliertem und eventuell geflocktem Pulver und das Trennen des wässrigen Fluids von dem Bett aus Aktivkohle aus koaguliertem und eventuell geflocktem Pulver in einem einzigen Behandlungsreaktor mit Aktivkohle aus Pulver durchgeführt wird, der im Aufwärtsstrom arbeitet.

4. Verfahren nach einem der vorangehenden Ansprüche, wobei der Trennungsschritt (b) kontinuierlich oder periodisch durchgeführt wird.

5. Verfahren nach einem der vorangehenden Ansprüche, wobei die Fraktion einen HCI-Index von über mindestens 10 Prozentpunkten über dem der Schlämme vor der Trennung aufweist.

6. Verfahren nach einem der vorangehenden Ansprüche, wobei eine einzige Trennung durchgeführt wird und die erhaltene zweite Fraktion eine SS-Konzentration aufweist, die mindestens 1,5 Mal niedriger als die der Schlämme vor der Trennung ist.

7. Verfahren nach Anspruch 6, wobei die zweite Fraktion durch Klären oder Flotation vor dem Behandlungsreaktor behandelt wird oder von einer Schlammbehandlungslinie behandelt wird.

8. Anlage zur Behandlung von wässrigen Fluiden, umfassend:

(a) eine Vorrichtung zur Behandlung von wässrigen Fluiden auf der Basis von Aktivkohle aus koaguliertem und eventuell geflocktem Pulver, die geeignet ist, ein Inkontaktversetzen des wässrigen Fluids mit einem Wirbelbett aus Aktivkohle aus koaguliertem und eventuell geflocktem Pulver und ein Trennen des wässrigen Fluids von dem Bett aus Aktivkohle aus koaguliertem und eventuell geflocktem Pulver sicherzustellen;

(b) Extraktionsmittel einer Fraktion aus dem Wirbelbett aus Aktivkohle aus Pulver in Schlammform;

(c) Beförderungsmittel der Schlämme vom Extraktionspunkt zu der Schlammtrennvorrichtung;

(d) mindestens eine Schlammtrennvorrichtung, die zum Erhalten eine Fraktion geeignet ist, die einen Unlöslichkeitsindex HCl von über mindestens 5 Prozentpunkten über dem der Schlämme vor der Trennung aufweist, wobei die Schlammtrennvorrichtung mindestens ein Hydrozyklon ist;

(e) Beförderungsmittel der getrennten Schlämme zur der Behandlungsvorrichtung wässriger Fluide,

wobei die Aktivkohle aus Pulver einen mittleren Durchmesser von unter 100 μm aufweist.

9. Anlage nach Anspruch 8, wobei die Behandlungsvorrichtung wässriger Fluide ein einziger Behandlungsreaktor mit Aktivkohle aus Pulver ist, der im Aufwärtsstrom arbeitet.

## Claims

1. A method for treating an aqueous fluid comprising contacting the aqueous fluid with a fluidized bed of coagulated and optionally flocculated powdered activated carbon and a separation of the aqueous fluid from the coagulated and optionally flocculated powdered activated carbon bed, said method of treating being **characterized in that** it comprises a step of managing the fluidized bed of coagulated and optionally flocculated powdered activated carbon, said management step comprising:

   (a) an extraction of a fraction of the coagulated and optionally flocculated powdered activated carbon fluidized bed in the form of sludge;
   (b) at least one separation of the sludge extracted from step (a) so as to obtain a fraction having an insoluble HCl index higher by at least 5 percentage points than that of the sludge before separation, said separation step (b) being carried out by means of at least one hydrocyclone;
   (c) a reinjection of said fraction obtained in step (b) into the coagulated and optionally flocculated powdered activated carbon fluidized bed,

   the powdered activated carbon having a mean diameter less than 100 μm.

2. Method according to claim 1, wherein said fraction has a concentration of suspended solids (SS) at least two times higher than the SS concentration of the sludge before separation.

3. Method according to claim 1, wherein contacting the aqueous fluid with a coagulated and optionally flocculated powdered activated carbon fluidized bed and the separation of the aqueous fluid from the coagulated and optionally flocculated powdered activated carbon bed are carried out in a single treatment reactor with powdered activated carbon having up-flow operation.

4. Method according to any one of the preceding claims, wherein the separation step (b) is carried out continuously or periodically.

5. Method according to any one of the preceding claims, wherein said fraction has an HCl index higher by at least 10 percentage points than the one for the sludge before separation.

6. Method according to any one of the preceding claims, wherein a single separation is carried out and the second fraction obtained has a MES concentration at least 1.5 times lower than that of the sludge before separation.

7. Method according to claim 6, wherein the second fraction is treated by clarification or floatation upstream of the treatment reactor or treated by a sludge treatment system.

8. Aqueous fluid treatment installation comprising:

   (a) a treatment device for aqueous fluids based on coagulated and optionally flocculated powdered activated carbon designed to ensure contact of the aqueous fluid with a coagulated and optionally flocculated powdered activated carbon fluidized bed and separation of the aqueous fluid from the coagulated and optionally flocculated activated carbon bed;

(b) extraction means for a fraction of the powdered activated carbon fluidized bed in the form of sludge;

(c) means for conveying sludge from the extraction point to the sludge separation device;

(d) at least one device for sludge separation designed to obtain a fraction having an insoluble HCl index greater by at least 5 percentage points than that of the sludge before separation, said sludge separation device being at least one hydrocyclone;

(e) means for conveying the separated sludge to the aqueous fluid treatment device,

the powdered activated carbon having a mean diameter less than 100 $\mu$m.

9. Installation according to claim 8, wherein the aqueous fluid treatment device is a single reactor for treatment with powdered activated carbon operating in ascending flow.

10

9

7

Fluide aqueux traité

8

4

6

2

5

3

12

1

**FIGURE 1**

**FIGURE 2**

**FIGURE 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013243684 A
- FR 2946333
- FR 1354387